# EUROPEAN PATENT SPECIFICATION

(11) **EP 4 011 781 B1**
(45) Date of publication and mention of the grant of the patent: **22.05.2024**
(21) Application number: 21213224.5
(22) Date of filing: 08.12.2021
(51) Int. Cl.: B64D 45/00, B64C 1/14

(54) **COCKPIT DOOR SECURITY SYSTEM**
COCKPIT-TÜR-SICHERHEITSSYSTEM
SYSTÈME DE SÉCURITÉ DE PORTE DE COCKPIT

(30) Priority: 08.12.2020 CA 3101899
(43) Date of publication of application: 15.06.2022
(73) Proprietor: Airbus Canada Limited Partnership, Mirabel, QC J7N 3C6 (CA)
(72) Inventor: MATHIEU, Mark, Mirabel, J7N 3C6 (CA); LEDUC, Marc-André, Mirabel, J7N 3C6 (CA)
(74) Representative: den Braber, Gérard Paul

(56) References cited:
- EP-A1- 3 133 013
- WO-A1-2017/059481
- FR-A1- 3 036 098
- US-A1- 2009 065 641

## Description

### TECHNICAL FIELD

In general, this disclosure relates to a system for securing a door for a cockpit or flight deck for access to the lavatory or a rest area. More preferably, the system uses a lavatory door to secure the rest area.

### BACKGROUND

There are many concerns surrounding aircraft safety. One of the more recently emphasized concerns involves ensuring safety from hijackers or those desiring harm from within an aircraft. More particularly, protection of the pilot and those in the flight deck is of prime importance.

Recently, airlines have secured the flight deck by installing stronger doors and locking mechanisms that cannot be forced open from the outside. Such measures have been problematic, however, since there are routine times when a member of the flight deck crew will need to open the door to use the lavatory or for other matters. The strength of the door does not hinder a hijacker who will wait for the door to open and then quickly enter the flight deck. Once inside, the strength of the door protects the hijacker and prevents others from entering.

Other forms of securing the flight deck involve installing a second permanently fixed door to prevent passengers from determining when the flight deck door is open; however, such a measure is suboptimal since it takes up space and involves additional cost.

U.S. Patent Publication No. 2005116098 teaches a securable curtain which can be closed around the flight deck door. When not in use, the curtain can be opened to provide more space.

A security partition is provided in U.S. Publication No. 20100288881 which includes a flight deck connected to an accommodation room having a lounge and lavatory.

Other types of securing mechanisms have been contemplated, such as taught in U.S. Patent No. 7984875 wherein the flight deck door has a latching mechanism and hinge system such that the flight deck door swings open to engage with a flight deck bulkhead in one position, and a lavatory bulkhead in a second position so that flight deck crew can safely enter the lavatory from the flight deck while the flight deck door is in the second position. The flight deck door runs along the lavatory door such that the lavatory bulkhead must be positioned right next to the flight deck bulkhead.

U.S. Patent No. 6,702,231 describes a secure door system for a cockpit of an aircraft. This system includes a frame connected to an interior wall of an aircraft, such that the frame can move from a first configuration in an insecure area to a second configuration in a secure area. The cockpit door is accessible in the first configuration and is not accessible in the second configuration. Drawbacks include the weight of the frame, door and hinge configuration along with the complications of such a system. Two different hinges are required as well as many additional elements, such as locks and lock receivers.

Flight regulations are in the process of receiving updates to include new requirements for a flight deck access security secondary barrier. The regulations require a secondary barrier to be positioned between the cabin and the lavatory for the pilots to access the lavatory without risk of an intruder penetrating the secure area of the cockpit.

Patent publication FR3036098 describes an access device allowing secure communication between different zones in an aircraft. The access device comprises a folding door. In a folded position, the folding door may close an opening. In a deployed position, the folding door may form an airlock with a movable flap. The movable flap may close the opening cleared by deployment of the folding door.

### SUMMARY

There is provided herein a system as defined in claim 1 appended to this description. The system uses the lavatory door and/or a secondary door to block access to an area between the forward lavatory and the cockpit from the cabin. The system minimizes cost and weight impact and provides a simple and effective secure locking system for the cockpit.

When a member of the flight crew leaves the cockpit to use the lavatory, the cockpit door serves as a privacy door and can be manually locked from the cabin/lavatory side. The system is independent of the type of door and can use a single blade door or a bifold door, for example.

There is also provided herein a method as defined in claim 13 appended to this description. The lavatory door is opened and secured to an adjacent structure by means of a latching mechanism provided on this structure and a locking mechanism of the lavatory door, which are compatible with each other. Accordingly, the lavatory door then blocks access to a part of the aisle adj acent to the cockpit door. In this condition, a person in the cockpit who needs to use the lavatory may safely unlock and open the cockpit door. Once that person is present in the part of the aisle adjacent to the cockpit door, or in the lavatory, the person may lock the cockpit door by means of an external lock on the cockpit door. Accordingly, the cockpit door then serves as a privacy door for the person using the lavatory.

### BRIEF DESCRIPTION OF THE DRAWINGS

The invention will be further understood from the following description with reference to the attached drawings.
Figure 1 illustrates a top view of a portion of an aircraft showing the arrangement of the flight deck door and lavatory door with a secondary door.
Figure 2 illustrates a top view of a portion of an aircraft showing the opening of the flight deck door when the lavatory locking mechanism is in place.
Figure 3 illustrates a top view of a portion of an aircraft showing the arrangement of the flight deck door and lavatory door without a secondary door.

### DETAILED DESCRIPTION

The exemplary embodiments of the present disclosure are described and illustrated below to encompass a secure cockpit door system, for example purposes only. Of course, it will be apparent to those of ordinary skill in the art that the embodiments discussed below are exemplary in nature and may be reconfigured without departing from the scope of the present disclosure. However, for clarity and precision, the exemplary embodiments as discussed below may include optional steps, methods, and features that one of ordinary skill should recognize as not being a requisite to fall within the scope of the present disclosure.

In one example embodiment, the system uses a lavatory door to separate the aircraft cabin from the lavatory/flight deck area. When the lavatory door is opened, it is latched to a monument across the aisle from the lavatory. If the lavatory door is too short because the monument is too far, the lavatory door is latched to a secondary door attached to the monument. After the door is secured and locked, a pilot can open the flight deck door, exit the flight deck, close and manually lock the flight deck door and use the lavatory. Privacy is provided via the cockpit door and lavatory door.

In a further example embodiment, the secondary door can be locked to the floor and/or to the ceiling to secure the open position. In one embodiment, the secondary barrier door is fixed to the monument facing the lavatory.

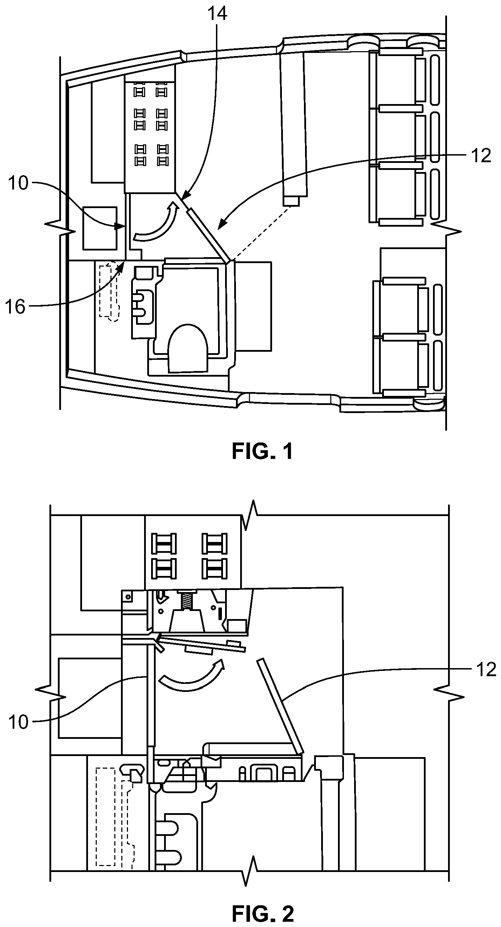

Figure 1 shows a top view of an aircraft showing a portion of the flight deck or cockpit and cabin. The flight deck door 10 is shown in a closed and locked position. The lavatory door 12 is shown in three optional positions: closed against the lavatory (first optional position), open at a first angle connected with the first monument closest to the flight deck (second optional position) and open at a second angle connected with a second monument closest to the cabin section (third optional position). An optional secondary barrier door 14 is shown attached to the first monument. Any such secondary barrier door could also be provided at the second monument if necessary. A door locking device 16 that is accessible from the outside is shown such that when a member of the flight crew leaves the cockpit to use the lavatory, the flight deck door 10 serves as a privacy door and can be manually locked from the cabin/lavatory side using the door locking device 16.

The third optional position of the lavatory door 12 could enable a member of the flight crew to access a refreshment or optional lounge area.

Figure 2 shows the ability of the flight deck door 10 to open while the lavatory door 12 locking mechanism is in place.

In one example embodiment, the lavatory door 12 is able to open at an angle suitable to contact the secondary barrier door 14. Both the lavatory door and the secondary barrier door are equipped with compatible locking devices so as to prevent uncoupling provided a pilot is in the secured area. Any type of suitable locking device can be used. For example, an electronic locking device can be provided which can only be locked or unlocked by either the pilot or a cabin crew member through a password. As a further example, a password could be entered into a dedicated locking system or into an existing surveillance system through input device such as keypad. Other suitable locking mechanisms can be utilized, such as traditional key locks, smart keys, pattern locks, or a biometric lock using fingerprints or facial recognition.

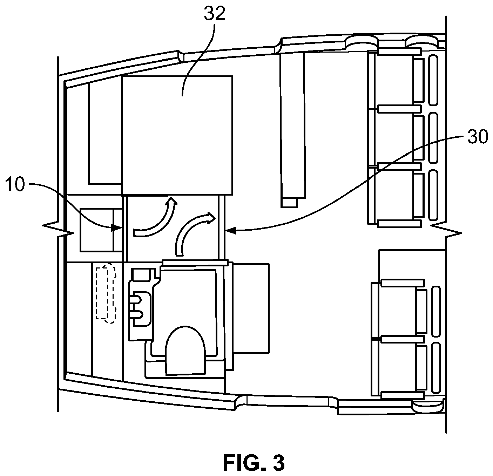

If there is no need for a secondary door because of the full size of the opposite monument or the full size of the lavatory door 14 extending to reach the first monument, solely the lavatory door is used to close the secured area without a secondary door. Such an embodiment is illustrated in Figure 3. In such an example embodiment, a locking mechanism secures the sole lavatory door 30 directly to the monument 32, such that the compatible locking devices are provided on the lavatory door 30 and the monument 32. The flight deck door 10 can be opened once the sole lavatory door 30 is secured.

In one example use of the system, a member of the flight crew communicates a request to a cabin crew member to actuate the lavatory door locking mechanism. Upon receipt of an indication that the lavatory door locking mechanism is in place, the cockpit door can be opened so that the flight crew member can access the lavatory privately and without any risk of intrusion. The communication of the request to the cabin crew member can be performed by any form of communication, such as audio, video, a flashing light, text, etc.

It will be appreciated by one skilled in the art that variants can exist in the above-described arrangements and applications. For example, the extent, location and reach of the lavatory door and/or monuments can vary. The drawings are mere illustrations and lavatories could be provided in a different orientation or on a different side of the aircraft while still operating within the scope of the invention. The lavatory door and/or flight deck door can be reversible. Similarly, although the invention has been described with respect to an example embodiment of an aircraft lavatory, the invention can be applied to lavatories in other types of scenarios such as trains. The term "cockpit" should therefore be broadly interpreted. The term may embrace any space within passenger transportation means from which the passenger transportation means can be controlled. The term "cabin" should also be broadly interpreted. The term may embrace any space configured to accommodate at least one passenger.

Following from the above description, it should be apparent to those of ordinary skill in the art that, while the methods and apparatuses herein described constitute exemplary embodiments of the present invention, the invention described herein is not limited to any precise embodiment and that changes may be made to such embodiments without departing from the scope of the invention as defined by the claims. Consequently, the scope of the claims should not be limited by the preferred embodiments set forth in the examples but should be given the broadest interpretation consistent with the description as a whole. Likewise, it is to be understood that it is not necessary to meet any or all of the identified advantages or objects of the invention disclosed herein in order to fall within the scope of any claims, since the invention is defined by the claims and since inherent and/or unforeseen advantages of the present invention may exist even though they may not have been explicitly discussed herein.

## Claims

1. A system configured for a passenger transportation means, the system being configured to secure a cockpit from a cabin of said transportation means, the system having:
- an aisle configured to lead from the cabin to a flight deck door (10) giving access to the cockpit; and
- a lavatory having a lavatory door (12, 30) that is configured to swing out into a part of the aisle adjacent to the flight deck door, the lavatory door being provided with a locking mechanism,
**characterized in that** the system comprises:
- a latching mechanism provided on an adjacent structure across the aisle from the lavatory, the latching mechanism being compatible with the locking mechanism of the lavatory door to secure the lavatory door in an open position blocking access from the cabin to the part of the aisle adjacent to the flight deck door.

2. A system according to claim 1, wherein the flight deck door (10) is openable once the lavatory door (12, 30) is in the open position blocking access from the cabin to the part of the aisle adjacent to the flight deck door.

3. A system according to any of claims 1 and 2, wherein the adjacent structure is a monument (32).

4. A system according to any of claims 1 and 2, wherein the adjacent structure is a secondary door (14) that is secured to a monument.

5. A system according to any of claims 1 to 4 further comprising a second latching mechanism on a second adjacent structure; wherein the locking mechanism is compatible with the second latching mechanism to secure the lavatory door (12, 30) in a second open position.

6. A system according to claim 5 wherein the second adjacent structure is a monument.

7. A system according to claim 5 wherein the second adjacent structure is a secondary door that is secured to a monument.

8. A system according to any one of claims 1 to 7 further comprising a communication device between the cockpit and the cabin which alerts crew in the cabin to secure the lavatory door (12, 30).

9. A system according to claim 8 wherein the communication device uses a form of communication selected from the group consisting of audio, video, text and flashing light.

10. A system according to any one of claims 1 to 9 wherein the locking mechanism and latching mechanism use a locking system selected from the group consisting of passwords, keys, smart keys, pattern locks, and biometric locks.

11. A system according to any one of claims 1 to 10 wherein the flight deck door (10) comprises an external lock (16) that can be locked from the cabin.

12. A system according to claim 11 wherein the external lock (16) uses a locking system selected from the group consisting of passwords, keys, smart keys, pattern locks, and biometric locks.

13. A method for securing a cockpit from a cabin in a passenger transportation means having:
- an aisle leading from the cabin to a flight deck door (10) giving access to the cockpit; and
- a lavatory having a lavatory door (12, 30) that swings out into a part of the aisle adjacent to the flight deck door, the lavatory door being provided with a locking mechanism,
**characterized in that** the method comprises the steps of:
- securing the lavatory door in an open position by means of, on the one hand, the locking mechanism of the lavatory door and, on the other hand, a compatible latching mechanism provided on an adjacent structure across the aisle from the lavatory, so that the lavatory door in the open position blocks access from the cabin to the part of the aisle adjacent to the flight deck door.

14. A method for securing a cockpit from a cabin according to claim 13, further comprising the step of sending a communication from the cockpit to the cabin to request securing of the lavatory door.

15. Passenger transportation means comprising:
- a cockpit from which the passenger transportation means can be controlled;
- a cabin configured to accommodate at least one passenger;
- a system in accordance with any of claims 1 to 12.

## Patentansprüche

1. System, das für ein Personentransportmittel konfiguriert ist, wobei das System konfiguriert ist, um ein Cockpit von einer Kabine des Transportmittels zu sichern, wobei das System aufweist:
- einen Gang, der konfiguriert ist, von der Kabine zu einer Flugdecktür (10) zu führen, die einen Zugang zum Cockpit bietet; und
- eine Toilette, die eine Toilettentür (12, 30) aufweist, die konfiguriert ist, um in einen Teil des Ganges, angrenzend an die Flugdecktür auszuschwenken, wobei die Toilettentür mit einem Verriegelungsmechanismus vorgesehen ist,
**dadurch gekennzeichnet, dass** das System umfasst:
- einen Rastmechanismus, der an einer angrenzenden Struktur quer durch den Gang von der Toilette vorgesehen ist, wobei der Rastmechanismus mit dem Verriegelungsmechanismus der Toilettentür kompatibel ist, um die Toilettentür in einer offenen Position, die den Zugang von der Kabine zu dem Teil des Ganges, angrenzend an die Flugdecktür blockiert, zu sichern.

2. System nach Anspruch 1, wobei die Flugdecktür (10) geöffnet werden kann, sobald die Toilettentür (12, 30) in der offenen Position ist, die den Zugang von der Kabine zu dem Teil des Ganges, angrenzend an die Flugdecktür blockiert.

3. System nach einem der Ansprüche 1 und 2,
wobei die angrenzende Struktur ein Monument (32) ist.

4. System nach einem der Ansprüche 1 und 2,
wobei die angrenzende Struktur eine Nebentür (14) ist, die an einem Monument gesichert ist.

5. System nach einem der Ansprüche 1 bis 4,
weiter umfassend einen zweiten Rastmechanismus an einer zweiten angrenzenden Struktur;
wobei der Verriegelungsmechanismus mit dem zweiten Rastmechanismus kompatibel ist, um die Toilettentür (12, 30) in einer zweiten offenen Position zu sichern.

6. System nach Anspruch 5, wobei die zweite angrenzende Struktur ein Monument ist.

7. System nach Anspruch 5, wobei die zweite angrenzende Struktur eine Nebentür ist, die an einem Monument gesichert ist.

8. System nach einem der Ansprüche 1 bis 7, weiter umfassend eine Kommunikationsvorrichtung zwischen dem Cockpit und der Kabine, welche die Crew in der Kabine darauf aufmerksam macht, die Toilettentür (12, 30) zu sichern.

9. System nach Anspruch 8, wobei die Kommunikationsvorrichtung eine Form von Kommunikation nutzt, die aus der Gruppe ausgewählt ist, die aus Audio, Video, Text und Blinklicht besteht.

10. System nach einem der Ansprüche 1 bis 9, wobei der Verriegelungsmechanismus und Rastmechanismus ein Verriegelungssystem nutzen, das aus der Gruppe ausgewählt ist, die aus Passwörtern, Schlüsseln, intelligenten Schlüsseln, Musterverriegelungen und biometrischen Verriegelungen besteht.

11. System nach einem der Ansprüche 1 bis 10, wobei die Flugdecktür (10) eine äußere Verriegelung (16) umfasst, die von der Kabine aus verriegelt werden kann.

12. System nach Anspruch 11, wobei die äußere Verriegelung (16) ein Verriegelungssystem nutzt, das aus der Gruppe ausgewählt ist, die aus Passwörtern, Schlüsseln, intelligenten Schlüsseln, Musterverriegelungen und biometrischen Verriegelungen besteht.

13. Verfahren zum Sichern eines Cockpits von einer Kabine in einem Personentransportmittel, das aufweist:
- einen Gang, der von der Kabine zu einer Flugdecktür (10) führt, die einen Zugang zum Cockpit bietet; und
- eine Toilette, die eine Toilettentür (12, 30) aufweist, die in einen Teil des Ganges, angrenzend an die Flugdecktür ausschwenkt, wobei die Toilettentür mit einem Verriegelungsmechanismus vorgesehen ist,
**dadurch gekennzeichnet, dass** das Verfahren die Schritte umfasst, zum:
- Sichern der Toilettentür in einer offenen Position anhand einerseits des Verriegelungsmechanismus der Toilettentür, und andererseits eines kompatiblen Rastmechanismus, der an einer angrenzenden Struktur, quer durch den Gang von der Toilette vorgesehen ist, sodass die Toilettentür in der offenen Position einen Zugang von der Kabine in den Teil des Ganges angrenzend an die Flugdecktür blockiert.

14. Verfahren zum Sichern eines Cockpits von einer Kabine nach Anspruch 13, weiter umfassend den Schritt des Sendens einer Kommunikation vom Cockpit in die Kabine, um ein Sichern der Toilettentür anzufordern.

15. Personentransportmittel, umfassend:
- ein Cockpit, von dem aus das Personentransportmittel gesteuert werden kann;
- eine Kabine, die konfiguriert ist, um mindestens eine Person aufzunehmen;
- ein System nach einem der Ansprüche 1 bis 12.

## Revendications

1. Système configuré pour un moyen de transport de passagers, le système étant configuré pour sécuriser un poste de pilotage par rapport à un habitacle dudit moyen de transport, le système ayant :
- un couloir configuré pour mener de l'habitacle à une porte de poste de pilotage (10) donnant accès au poste de pilotage ; et
- des toilettes ayant une porte de toilettes (12, 30) qui est configurée pour pivoter vers l'extérieur dans une partie du couloir adjacente à la porte de poste de pilotage, la porte de toilettes étant pourvue d'un mécanisme de verrouillage,
**caractérisé en ce que** le système comprend :
- un mécanisme de blocage disposé sur une structure adjacente de l'autre côté du couloir par rapport aux toilettes, le mécanisme de blocage étant compatible avec le mécanisme de verrouillage de la porte de toilettes pour fixer la porte de toilettes dans une position ouverte bloquant l'accès à partir du poste de pilotage vers la partie du couloir adjacente à la porte de poste de pilotage.

2. Système selon la revendication 1, dans lequel la porte de poste de pilotage (10) peut être ouverte lorsque la porte de toilettes (12, 30) est dans la position ouverte, bloquant l'accès à partir de l'habitacle vers la partie du couloir adjacente à la porte de poste de pilotage.

3. Système selon l'une quelconque des revendications 1 et 2, dans lequel la structure adjacente est un module d'aménagement (32).

4. Système selon l'une quelconque des revendications 1 et 2, dans lequel la structure adjacente est une porte secondaire (14) qui est fixée à un module d'aménagement.

5. Système selon l'une quelconque des revendications 1 à 4, comprenant en outre un second mécanisme de blocage sur une seconde structure adjacente ;
dans lequel le mécanisme de verrouillage est compatible avec le second mécanisme de blocage pour fixer la porte de toilettes (12, 30) dans une seconde position ouverte.

6. Système selon la revendication 5, dans lequel la seconde structure adjacente est un module d'aménagement.

7. Système selon la revendication 5, dans lequel la seconde structure adjacente est une porte secondaire qui est fixée à un module d'aménagement.

8. Système selon l'une quelconque des revendications 1 à 7, comprenant en outre un dispositif de communication entre le poste de pilotage et l'habitacle, qui alerte l'équipage dans l'habitacle pour fixer la porte de toilettes (12, 30).

9. Système selon la revendication 8, dans lequel le dispositif de communication utilise une forme de communication sélectionnée dans le groupe constitué d'audio, de vidéo, de texte et de lumière clignotante.

10. Système selon l'une quelconque des revendications 1 à 9, dans lequel le mécanisme de verrouillage et le mécanisme de blocage utilisent un système de verrouillage sélectionné dans le groupe constitué de mots de passe, clés, clés intelligentes, motifs de verrouillage et serrures biométriques.

11. Système selon l'une quelconque des revendications 1 à 10, dans lequel la porte de poste de pilotage (10) comprend une serrure externe (16) qui peut être verrouillée à partir de l'habitacle.

12. Système selon la revendication 11, dans lequel la serrure externe (16) utilise un système de verrouillage sélectionné dans le groupe constitué de mots de passe, clés intelligentes, motifs de verrouillage et serrures biométriques.

13. Procédé de sécurisation d'un poste de pilotage par rapport à un habitacle dans un moyen de transport de passagers ayant :
- un couloir menant de l'habitacle à une porte de poste de pilotage (10) donnant accès au poste de pilotage ; et
- des toilettes ayant une porte de toilettes (12, 30) qui pivote vers l'extérieur dans une partie du couloir adjacente à la porte de poste de pilotage, la porte de toilettes étant pourvue d'un mécanisme de verrouillage,
**caractérisé en ce que** le procédé comprend les étapes suivantes :
- la fixation de la porte de toilettes dans une position ouverte au moyen, d'une part, du mécanisme de verrouillage de la porte de toilettes et, d'autre part, d'un mécanisme de blocage compatible disposé sur une structure adjacente de l'autre côté du couloir par rapport aux toilettes, de sorte que la porte de toilettes dans la position ouverte bloque l'accès à partir de l'habitacle vers la partie du couloir adjacente à la porte de poste de pilotage.

14. Procédé de sécurisation d'un poste de pilotage par rapport à un habitacle selon la revendication 13, comprenant en outre l'étape d'envoi d'une communication du poste de pilotage à l'habitacle pour demander la fixation de la porte de toilettes.

15. Moyen de transport de passagers comprenant :
- un poste de pilotage à partir duquel le moyen de transport de passagers peut être commandé ;
- un habitacle configuré pour accueillir au moins un passager ;
- un système selon l'une quelconque des revendications 1 à 12.
